# EUROPEAN PATENT SPECIFICATION

(11) **EP 1 569 219 B1**
(45) Date of publication and mention of the grant of the patent: **21.05.2008**
(21) Application number: 05004165.6
(22) Date of filing: 25.02.2005
(51) Int. Cl.: G11B 19/02

(54) **Information recording apparatus, information reproduction apparatus, information recording method and information recording program**
Informationsaufzeichnungsgerät, Informationswiedergabegerät, Informationsaufzeichnungsverfahren und Informationsaufzeichnungsprogramm
Appareil d'enregistrement d'informations, appareil de reproduction d'informations, méthode d'enregistrement d'informations et programme d'enregistrement d'informations

(30) Priority: 26.02.2004 JP 2004051702
(43) Date of publication of application: 31.08.2005
(73) Proprietor: Pioneer Corporation, Meguro-ku, Tokyo (JP); Tech Experts Incorporation, Tokyo-to (JP); Pioneer System Technologies Corporation, Sendai-shi, Miyagi-ken (JP)
(72) Inventor: Nonaka, Yoshiya, Yamada Kawagoe-shi Saitama-ken (JP); Tarui, Nobuo, Yamada Kawagoe-shi Saitama-ken (JP); Nii, Noritaka, Yamada Kawagoe-shi Saitama-ken (JP); Sugino, Ryoji, Ohta-ku Tokyo-to (JP); Aoyama, Masashi, Ohta-ku Tokyo-to (JP); Iwaji, Hirobumi, Yamada Kawagoe-shi Saitama-ken (JP); Mutoh, Takeshi, Yamada Kawagoe-shi Saitama-ken (JP)
(74) Representative: Tappe, Hartmut

(56) References cited:
- EP-A- 1 050 881
- EP-A- 1 209 676
- US-A- 5 828 638

## Description

### BACKGROUND OF THE INVENTION

### 1.Field of the Invention:

This invention relates to an information-recording apparatus that records information and an information-reproduction apparatus that reproduces information.

### 2.Related Art:

Conventionally, a vehicle-mounted information-recording/reproduction apparatus recorded sounds and images of information such as that from a broadcast program, or information such as that on a CD (Compact Disc) to an internal hard disc such as a HDD (hard disc drive).

This kind of recording is possible using the battery mounted in the vehicle as a power supply. (reference: Japanese laid open Patent Application 2002-230893)

In the case of the conventional vehicle-mounted information-recording/reproduction apparatus having the construction described above, power is supplied to the battery from the engine when the engine is in operation, and the vehicle-mounted information-recording/reproduction apparatus operates with that battery as a power supply. While sufficient power is supplied from the battery, stable operation of the information-recording/reproduction apparatus is possible. However, when the engine is stopped, it becomes necessary for the information-recording/reproduction apparatus to operate only under the power that is charged in the battery, so when performing continuous recording or reproduction over a long period of time, there is a possibility that the power remaining in the battery will drop below the amount of power required to start the engine, or there is a possibility that the recording or reproduction operation will stop during the operation.

The European Patent Application EP 1 209 676 discloses a method of controlling disk writing operation based on battery remaining capacity but without a compression device.

### SUMMARY OF THE INVENTION

The object of this invention is to provide an information-recording apparatus, information-reproduction apparatus, information-recording method and information-recording program for recording information, that are capable of continuous recording or reproduction operation, while at the same time are capable of maintaining a constant recording or reproduction quality according to the amount of power remaining in the battery.

The above object of the present invention can be achieved by an information-recording apparatus according to claim 1.

According to the present invention, when recording of program information such as audio by a vehicle-mounted information-recording apparatus is not finished when the vehicle engine stops, it is possible to control the power consumption of the information-recording apparatus based on the recording status, such as the compression ratio of the audio recorded by the recording device and revolutions per minute corresponding to the writing speed of the recording device. In other words, after the vehicle engine has stopped, it has become possible to record the audio by changing the compression ratio of the audio being recorded and the speed of recording by the recording device correspond to the power capacity of the battery or power supply of the information-recording apparatus, while at the same time maintain the quality of the recorded audio at a fixed quality.

In one aspect of the present invention can be achieved by the anti-theft system of the present invention. The information-recording apparatus of the present invention is, wherein the control device switches to a recording-pause mode for pausing the recording of the program when the power-supply voltage becomes less than a second threshold value that is less than the first threshold value.

According to the present invention, when it is determined that there is some power capacity remaining in the battery or power supply of the information-recording apparatus, by changing to the pause mode for recording the next audio information, it is possible to prevent using unnecessary power.

In another aspect of the present invention can be achieved by the information-recording apparatus of the present invention. The information-recording apparatus of the present invention is, wherein the control device performs operation control to stop the recording of the program when the power-supply voltage becomes less than a third threshold value that is less than the second threshold value.

According to the present invention, when the power capacity of the battery or power supply for the information-recording apparatus is not sufficient to continue the operation for recording audio, the recording operation stops immediately even in the middle of recording audio, and the management information for the audio that was in the progress of being recorded is deleted. With this kind of construction, by maintaining the power capacity remaining in the battery above a minimum amount, it is possible to maintain enough power to start a device such as a cell motor when starting the vehicle.

In further aspect of the present invention can be achieved by the information-recording apparatus of the present invention. The information-recording apparatus of the present invention is, wherein the control device determines whether or not the recording of one unit of information contained in the program information is finished, and when it is not finished, performs control to delete the unit of information that is only partially recorded from the memory device.

According to the present invention, when the power capacity of the battery or power supply of the information-recording apparatus becomes low, the operation of recording audio to a recording device is continued until the song in the progress of being recorded ends. After that, only the minimum amount of power required for the information-recording apparatus is consumed. Therefore, audio that is in the progress of being recorded is not interrupted in the middle. Also, since it is possible to end recording audio in song units, extra power remaining in the battery, whose remaining power is low, is not consumed, and thus it is possible to maintain enough power to operate a device such as a cell motor when starting the vehicle.

In further aspect of the present invention can be achieved by the information-recording apparatus of the present invention. The information-recording apparatus of the present invention is further provided with; an information-compression device which compresses the program information before recording the program information in the recording device; and wherein the control device controls the information-compression device to decrease the compression ratio of the program information after switching to the low-power-consumption mode.

According to the present invention, by reducing the compression ratio of the audio when performing the operation for recording the audio, the power consumption of a the information-compression device performing the audio compression is also reduced, so overall power consumption of the overall information-recording apparatus decreases. Also, since the percentage of power capacity remaining in the battery becomes smaller, it becomes even more possible to continue recording the audio to be recorded.

In further aspect of the present invention can be achieved by the information-recording apparatus of the present invention. The information-recording apparatus of the present invention is further complied with a processing device which performs a specified process on the program information when recording to the recording device; and wherein the control device controls the processing device to perform the recording operation of the program information at minimum power consumption set according to the relationship between the recording status of the program information by the recording device, and processing status of the processing device.

According to the present invention, when the vehicle engine has stopped but the reproduction of program information such as audio that uses a vehicle-mounted information-reproduction apparatus has not yet finished, it is possible to control the power consumption of the information-reproduction apparatus based on the reproduction status such as decoding of the audio from the reproduction device, and the revolutions per minute that corresponds to the reading speed of the reproduction device. In other words, after the vehicle engine has stopped, it is possible to reproduce the remaining audio by changing the decoding rate of the audio being reproduced and the reproduction speed of the reproduction device in accordance to the power capacity of the battery or power supply of the information-reproduction apparatus.

The above object of the present invention can be achieved by an information-reproducing apparatus. The information-reproduction apparatus that reproduces program information from a recording device, is provided with: a control device which controls the operation of the apparatus; and a voltage-monitoring device which monitors the power-supply voltage that is supplied to the apparatus; and wherein the control device switches to a low-power-consumption mode for lowering the power consumption of the apparatus when reproducing the program information when the power-supply voltage becomes less than a predetermined first threshold value.

According to the present invention, when reproducing of program information such as audio by a vehicle-mounted information-reproducing apparatus is not finished when the vehicle engine stops, it is possible to control the power consumption of the information-reproducing apparatus based on the reproducing status, such as the decompression ratio of the audio reproduced by the reproducing device and revolutions per minute corresponding to the reproducing speed of the reproducing device. In other words, after the vehicle engine has stopped, it has become possible to reproduce the audio by changing the decompression ratio of the audio being reproduced and the speed of reproducing by the reproducing device correspond to the power capacity of the battery or power supply of the information- reproducing apparatus, while at the same time maintain the quality of the reproduced audio at a fixed quality.

The above object of the present invention can be achieved by an information-recording method. The information-recording method of recording program information to a recording device, is provided with: a control process of controlling the operation of the apparatus; and a voltage-monitoring process of monitoring the power-supply voltage supplied to the apparatus; and wherein the control process switches to a low-power-consumption mode for lowering the power consumption of the apparatus when recording the program information when the power-supply voltage becomes less than a predetermined first threshold value.

According to the present invention, when recording of program information such as audio by a vehicle-mounted information-recording apparatus is not finished when the vehicle engine stops, it is possible to control the power consumption of the information-recording apparatus based on the recording status, such as the compression ratio of the audio recorded by the recording device and revolutions per minute corresponding to the writing speed of the recording device. In other words, after the vehicle engine has stopped, it has become possible to record the audio by changing the compression ratio of the audio being recorded and the speed of recording by the recording device correspond to the power capacity of the battery or power supply of the information-recording apparatus, while at the same time maintain the quality of the recorded audio at a fixed quality.

The above object of the present invention can be achieved by an information-reproducing method. The information-reproduction method of reproducing program information from a recording device, is provided with: a control process of controlling the operation of the apparatus; and a voltage-monitoring process of monitoring the power-supply voltage that is supplied to the apparatus; and wherein the control process switches to a low-power-consumption mode for lowering the power consumption of the apparatus when reproducing the program information when the power-supply voltage becomes less than a predetermined first threshold value.

According to the present invention, when reproducing of program information such as audio by a vehicle-mounted information-reproducing apparatus is not finished when the vehicle engine stops, it is possible to control the power consumption of the information-reproducing apparatus based on the reproducing status, such as the decompression ratio of the audio reproduced by the reproducing device and revolutions per minute corresponding to the reproducing speed of the reproducing device. In other words, after the vehicle engine has stopped, it has become possible to reproduce the audio by changing the decompression ratio of the audio being reproduced and the speed of reproducing by the reproducing device correspond to the power capacity of the battery or power supply of the information- reproducing apparatus, while at the same time maintain the quality of the reproduced audio at a fixed quality.

### BRIEF DESCRIPTION OF THE DRAWINGS

FIG. 1 is a block diagram showing an example of the basic construction of the information-recording apparatus of a first embodiment of the invention.
FIG. 2 is a block diagram showing the basic construction of the information-recording apparatus of a second embodiment of the invention.
FIG. 3 is a flowchart showing the overall operation of a first embodiment of the invention.
FIG. 4 is a flowchart showing the overall operation of a second embodiment of the invention.

### DESCRIPTION OF THE PREFERRED EMBODIMENTS

The preferred embodiments of the invention will be explained based on the drawings.

In the embodiment described below, the invention is applied to the case in which a signal that is reproduced by an external information-reproduction apparatus is input to the information-recording apparatus of this invention and recorded by an information-recording unit such as a HDD (Hard Disc Drive).

### (I) Overall Construction and Operation

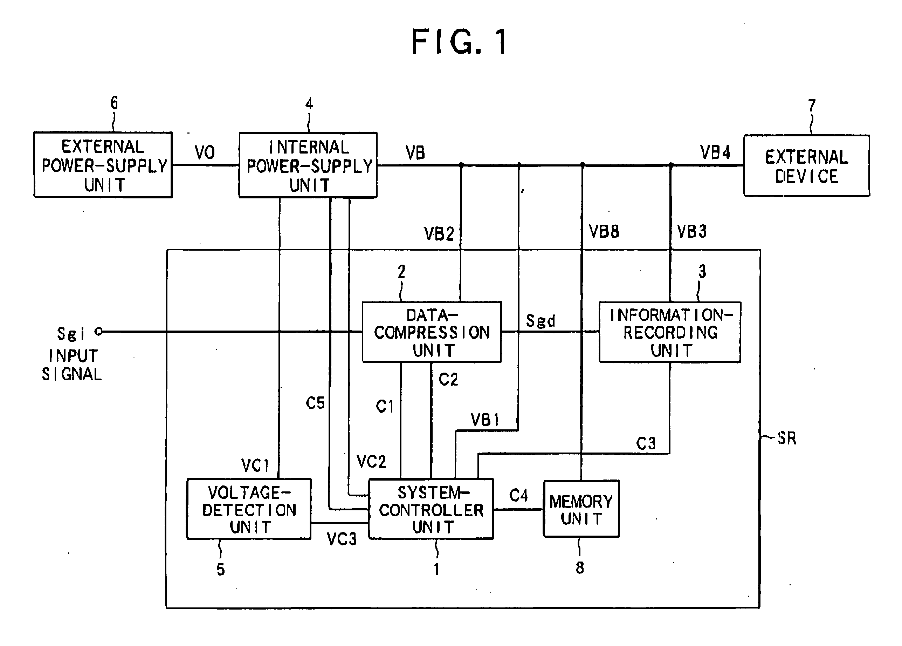

FIG. 1 will be used to explain the overall construction of the information-recording apparatus of this embodiment. FIG. 1 is a block diagram showing an example of the basic construction of the information-recording apparatus of this embodiment of the invention.

As shown in FIG. 1, the information-recording apparatus SR of this embodiment comprises: a data-compression unit 2 such as a DSP (Digital Signal Processor) that compresses program data of an input signal Sgi, which is a signal reproduced by an external information-reproduction apparatus; an information-recording unit 3 such as a hard disc drive that records the signal compressed by the data-compression unit 2; a voltage-detection unit 5 that detects the voltage from the internal power-supply unit 4 such as a battery that stores power supplied from the outside and supplies power to each block inside the information-recording apparatus SR; a memory unit 8 that records or reproduces information required by the information-recording unit 3; and a system-controller unit 1 that functions as a status-checking means for checking the recording status of the program information or the recording status of the information-recording unit 3, or functions as a control means that detects the status of and controls each block inside the information-recording apparatus SR.

Also, the internal-power-supply unit 4 located outside the information-recording apparatus SR can also be used as the power supply for driving external devices. In the case of this embodiment, the internal power-supply unit 4 is used when driving external devices such as the starter of the vehicle.

Furthermore, it is also possible to include a CPU (Central Processing Unit) for performing operation processing, and ROM (Read Only Memory) for executing the stored program, and RAM (Random Access Memory) for storing the operation results of the executed program in the system-controller unit 1. In this embodiment, a hard disc is explained as the recording medium (not shown in the figures) used by the information-recording unit 3, however, the invention is not limited to this, and it is also possible for the recording medium to be a CD (Compact Disc) -R (Recordable), CD-RW (ReWritable), DVD (Digital Versatile Disc) -R, DVD-RW, DVD+R, DVD+RW, DVD+ROM, DVD-RAM, MD (Mini Disc), etc.

The system-controller unit 1, which functions as the control means, detects the voltage of the internal power-supply unit 4 by way of a voltage-detection unit 5, which functions as a voltage-monitoring unit. Moreover, when the voltage of the internal power-supply unit 4 becomes less than a first preset threshold value, then according to the recording status of the program information (whether or not recording is in progress) or the recording status of the information-recording unit 3 (unrecorded capacity of the hard disc), the system-controller unit 1 switches to the low-power-consumption mode in order to lower the power consumption of the information-recording apparatus SR when program information is recorded.

The low-power-consumption mode is a state in which the signal quality of the output signal Sgd that is recorded by the information-recording unit 3 is kept at a fixed level, and power consumption by the data-compression unit 2, information-recording unit 3, voltage-detection unit 5, memory unit 8 and system-controller unit 1 of the information-recording apparatus SR is lowered.

Also, when the voltage of the internal power-supply unit 4 is less than a second reset threshold value, the system-controller unit 1, which functions as the control means, switches the information-recording apparatus SR to the recording-pause mode.

The recording-pause mode is a state in which the power consumption is at the minimum amount required for operating the function of the data-compression unit 2 of detecting whether or not there is an input signal to be recorded, the function of the voltage-detection unit 5 of detecting the voltage of the internal power-supply unit 4, and the function of the system-controller unit 1 of detecting these and controlling the information-recording apparatus SR.

Moreover, when the voltage of the internal power-supply unit 4 is less than the second threshold value and becomes less than a preset third threshold value, the system-controller unit 1, which functions as a control means, stops the recording operation of the information-recording apparatus SR. Also, when the program information is music data and recording is in progress, the system-controller unit 1, which functions as a control means, deletes the music data being recorded from the information-recording unit 3.

Furthermore, in the low-power-consumption mode, the system-controller unit 1, which functions as a control means, is able to perform control so as to lower the data-compression ratio of the data-compression unit 2.

Each block of this embodiment will be explained in detail below.

The information-recording apparatus SR of this embodiment receives information such as broadcast music that is received from a broadcast wave (hereafter the information will be referred to as the program information), or information, such as music that is reproduced by a player from a recording medium such as a CD on which music data is recorded (hereafter the information will be referred to as the program information), and is input as an input signal Sgi, and the data-compression unit 2 compresses the input signal Sgi and outputs it as an output signal Sgd. The information-recording unit 3 records the compressed output signal Sgd.

The data-compression ratio of the data-compression unit 2 is controlled by a control signal C1 from the system-controller unit 1. When the data-compression ratio for the input signal Sgi is increased, the data-compression unit 2 must perform a complex compression process, so the amount of operations increases. As a result, the amount of power consumed by the data-compression unit 2 also increases. Also, since the data-compression ratio is high, the amount of data of the output signal Sgd is less than the amount of data of the input signal Sgi. Moreover, since the amount of data to be recorded by the information-recording unit 3 is decreased, the amount of power consumed by the information-recordingunit 3 decreases. In other words, when the data-compression ratio of the data-compression unit 2 increases, the amount of power consumed by the data-compression unit 2 increases, however the amount of power consumed by the information-recording unit 3 decreases.

Also, when the data-compression ratio of the input signal Sgi is low, the data-compression unit 2 does not need to perform a complex compression process, so the amount of operations decreases. As a result, the amount of power consumed by the data-compression unit 2 decreases. Also, when the data-compression ratio decreases, the amount of data of the output signal Sgd increases. Moreover, since the amount of data to be recorded by the information-recording unit 3 increases, the amount of power consumed by the information-recording unit 3 increases. In other words, when the data-compression ratio of the data-compression unit 2 decreases, the amount of power consumed by the data-compression unit 2 decreases; however, the amount of power consumed by the information-recording unit 3 increases.

The relationship between the data-compression ratio and power consumption of the data-compression unit 2 is measured beforehand and stored beforehand in the ROM inside the system-controller unit 1. Also, the relationship between the amount of information to be recorded per hour and the power consumption of the information-recording unit 3 is measured beforehand, and stored beforehand in the ROM inside the system-controller unit 1. Moreover, after the data-compression ratio has been set, the power consumption of the data-compression unit 2 is set to correspond to the data-compression ratio. Furthermore, after the data-compression ratio is set, the amount of information to be recorded per unit time by the information-recording unit 3 is set, so the power consumption of the information-recording unit 3 is also set. The amount of information to be recorded per unit time corresponds to the bit rate (bits/second) of the information sent as an output signal Sgd.

The internal power-supply unit 4 is a battery that provides a power supply for each block inside the information-recording apparatus SR, such as the system-controller unit 1, however, power may be supplied from an external power-supply 6. In that case, the power generated by the external power-supply unit 6 is steady and supplied to each block inside the information-recording apparatus SR, while at the same time charges the internal power-supply unit 4.

The internal power-supply unit 4 supplies the required power to the system-controller unit 1 by way of the power line VB1, supplies the required power to the data-compression unit 2 by way of the power line VB2, and supplies the required power to the information-recording unit 3 by way of the power line VB3. Also, the internal power-supply 4 supplies the required power to the memory unit 8 by way of the power line VB8. In this way, the internal power-supply unit 4 supplies the required power to each block.

Also, the internal power-supply unit 4 becomes necessary as a power supply for starting an external device 7 such as the starter for an automobile. When an external device 7 such as the starter for an automobile starts, and the engine of the automobile starts, the external power-supply unit 6 generates power by the rotation of the engine, and supplies power to the internal power-supply unit 4. When power stops being supplied to the internal power-supply unit 4 from the external power-supply unit 6, is when the engine stops. When the input signal Sgi is input to the information-recording apparatus SR while the engine is stopped, the system-controller unit 1 has the data-compression unit 3 compress the input signal Sgi as necessary, and has the information-recording unit 3 record it.

The voltage-detection unit 5 detects the voltage level of the internal power-supply unit 4 by way of the signal VC1. The detection result is output to the system-controller unit 1 by way of the signal VC3. According to the signal VC3, the system-controller unit 1 determines whether or not to have the data-compression unit 3 compress the input signal Sgi, and have the information-recording unit 3 record it.

When power stops being supplied to the internal power-supply unit 4 from the external power-supply unit 6, the internal power-supply unit 4 inputs information to the system-controller unit 1 by way of the signal VC3 that indicates that power has stopped being supplied. After receiving that information, the system-controller unit 1 detects that it is necessary to operate the information-recording apparatus SR within the power capacity of the internal power-supply unit 4.

### (II) First Embodiment of the Invention

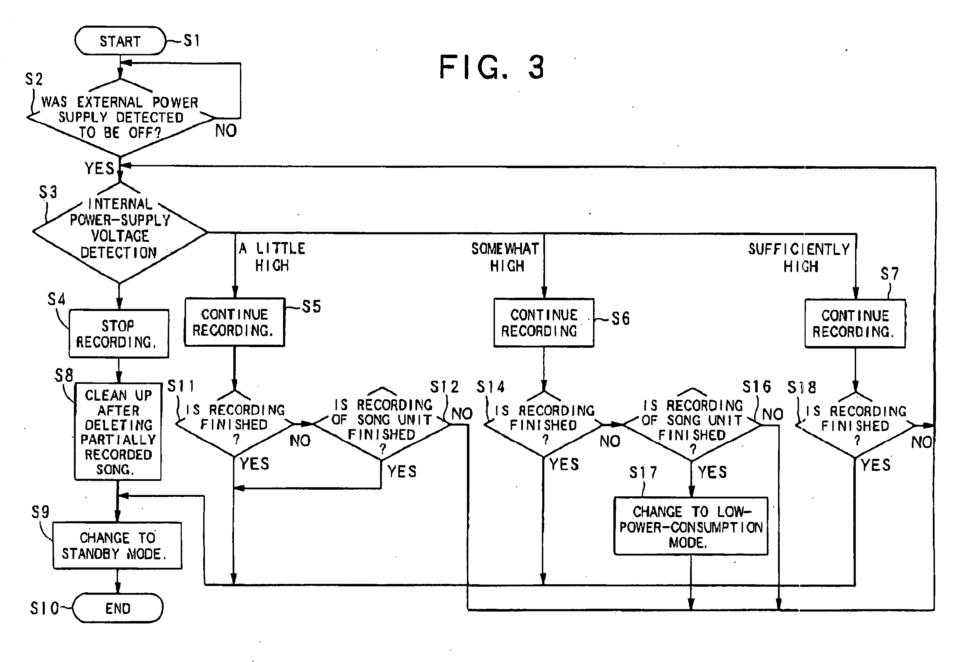

Next, FIG. 3 will be used to explain the recording process for recording the input signal Sgi, which is the program information of this embodiment of the invention that is executed under control of the system-controller unit 1. FIG. 3 is a flowchart showing the recording process of this embodiment.

Also, the processing by the system-controller unit 1 according to the voltage level of the internal power-supply unit 4 after power has stopped being supplied to the internal power-supply unit 4 from the external power-supply unit 6 is explained.

As shown in FIG. 3, in the recording process of this embodiment, the recording process starts in step S1. In other words, the data-compression unit 2 compresses the input signal Sgi, and the information-recording unit 3 records the output signal Sgd that is output from the data-compression unit 2. The system-controller unit 1 controls the operation described above.

In step S2, the system-controller unit 1 detects whether or not power is being supplied to the internal power-supply unit 4 from the external power-supply unit 6. The system-controller unit 1 detects whether or not power is being supplied to the internal power-supply unit 4 from the external power-supply unit 6 by the signal VC2 that is output from the internal power-supply unit 4. When power is being supplied to the internal power-supply unit 4 from the external power-supply unit 6 (step S1; NO), the data-compression unit 2 compresses the input signal Sgi, and after the output signal Sgd that is output from the data-compression unit 2 is recorded by the information-recording unit 3, the system-controller unit 1 checks again in step S1 whether or not the signal VC2 has changed. When power is not being supplied to the internal power-supply unit 4 from the external power-supply unit 6 (step S1; YES), the system-controller unit 1 advances to step S3 and starts monitoring the voltage.

In step S3, monitoring of the voltages begins, and the voltage-detection unit 5 detects the voltage of the internal power-supply unit 4 by way of the signal VC1 and inputs the detected result to the system-controller unit 1 by way of the signal VC3. When the result is that the voltage of the internal power-supply unit 4 is sufficiently large (for example, 14.4 volts or greater for the battery of this embodiment), the system-controller unit 1 advances to step S7; and when the result is that the voltage is somewhat large but less than the voltage for advancing to step S7, the system-controller unit 1 advances to step S6, and moreover, when the result is that the voltage is somewhat large but less than the voltage for advancing to step S6, the system-controller unit 1 advances to step S5, and furthermore, when the result is that the voltage is less than the voltage for advancing to step S5 (for example, less than 12.0 volts for the battery of this embodiment), the system-controller unit 1 advances to step S4.

In step S4, the system-controller unit 1 determines that the remaining power capacity of the internal power-supply unit 4 is low and immediately ends the recording operation, then advances to step S8.

Step S8 indicates a process that is performed when recording of the music data, which is the program information related to the input signal Sgi for which the recording operation was ended in step S4, ended while recording was in progress. When recording of the music information ended while recording was in progress, reproduction of the music information ends suddenly at the place where recording of the music information ended, so it is difficult for the user to listen to the music and reproduction is unsatisfactory. Therefore, in this embodiment, a process is performed in which recording is ended in song units of the music information being recorded. In other words, when the process advances to step S4 while a song is being recorded, then in step S8, a process is performed that deletes that song and does not leave the song that was being recorded in the information-recording unit 3.

For example, this process is not limited to actually deleting the entire song, but also includes making it impossible to reproduce that song during reproduction by deleting the management information for that song. After this kind of cleanup process, such as deleting a song that has not been completely recorded, ends, the system-controller unit 1 advances to step S9.

In step S9, the information-recording apparatus SR changes to the standby mode. Here, the standby mode is the state in which only the minimum amount of power required by the information-recording apparatus SR is consumed. More specifically, it is the state in which power is supplied from the internal power-supply unit 4 by way of the power line VBB to only the memory unit 8 in which the information required for operation of the information-recording apparatus SR is recorded. By having the information-recording apparatus SR change to this kind of state, it is possible to prevent an extra amount of power from the internal power-supply unit 4 from being consumed. As a result, when the information-recording apparatus SR is mounted in a vehicle, it is possible to leave the amount of power in the internal power-supply 4 needed for starting the starter or external device 7. Moreover, it is possible to prevent a state in which, due to the recording operation of the information-recording apparatus SR, the power in internal power-supply 4 becomes low and the starter or external device 7 cannot be started.

In step S5, the data-compression unit 2 compresses the input signal Sgi, and after the output signal Sgd that is output from the data-compression unit is recorded by the information-recording unit 3, the system-controller unit 1 advances to step S11.

In step S11, the system-controller unit 1 determines whether or not the recording operation by the information-recording apparatus SR is finished. That is, the system-controller unit 1 determines by way of the signal C1 that is output from the data-compression unit 2 whether or not there is still program information that was input as the input signal Sgi. When the recording operation is not finished (step S11: NO), the system-controller unit 1 advances to step S12, and when the recording operation is finished (step S11: YES), the system-controller unit 1 goes to step S9.

In step S12, during the recording operation by the information-recording apparatus SR, the system-controller unit 1 determines in song units whether or not recording of the program information input as the input signal Sgi has finished. More specifically, information that indicates whether or not the program information that was input as the input signal Sgi is at the end of a song is input to the system-controller unit 1 by way of the signal C1 that is output from the data-compression unit 2. When the system-controller unit 1 is not able to detect information that indicates that the program information is at the end of a song (step S12: NO), it goes to step S3, and detects the voltage of the internal power-supply unit 4 again. When the system-controller unit 1 is able to detect information that indicates that the program information is at the end of a song (step S12: YES), it advances to step S13.

Step S6 is a process that is performed when the detected voltage is larger than the voltage for advancing to step S5, but is not sufficiently large. As in step S5, the data-compression unit 2 compresses the input signal Sgi, and after the output signal Sgd that is output from the data-compression unit 2 is recorded by the information-recording unit 3, the system-controller unit 1 advances to step S14.

As in step S11, in step S14, the system-controller unit 1 determines whether or not the recording operation by the information-recording apparatus SR is finished. That is, the system-controller unit 1 determines by way of the signal C1 that is output from the data-compression unit 2 whether or not there is still program information that was input as the input signal Sgi. When the recording operation is not finished (step S14: NO), the system-controller unit 1 advances to step S16, and when the recording operation is finished (step S14: YES), the system-controller unit 1 goes to step S9.

In step S16, as in step S12, during the recording operation by the information-recording apparatus SR, the system-controller unit 1 determines in song units whether or not recording of the program information input as the input signal Sgi has finished. More specifically, information that indicates whether or not the program information that was input as the input signal Sgi is at the end of a song is input to the system-controller unit 1 by way of the signal C1 that is output from the data-compression unit 2. When the system-controller unit 1 is not able to detect information that indicates that the program information is at the end of a song (step S16: NO), it goes to step S3 and detects the voltage of the internal power-supply unit 4 again. When the system-controller unit 1 is able to detect information that indicates that the program information is at the end of a song (step S16: YES), it advances to step S17.

In step S17, the information-recording apparatus SR changes to the low-power-consumption mode. The low-power-consumption mode is a state in which the power that is supplied to the information-recording apparatus SR from the internal power-supply unit 4 is set to the minimum required amount, and the amount of power consumed by the information-recording apparatus SR is decreased. More specifically, the necessary power is supplied by way of the power line VB8 to the memory unit 8 in which the information required for the operation of the information-recording apparatus SR is recorded. This power is the minimum required amount of power for maintaining the state of the data recorded in the memory unit 8. Also, the power needed for operation of the information-recording apparatus SR is supplied to the system-controller unit 1 from the internal power-supply unit 4 by way of the power line VB1. The internal power-supply unit 4 supplies only the power required for the detected voltage to be input from the voltage-detection unit 5 and for the system-controller unit 1 to perform the judgment process and to output control signals to the other block units. Furthermore, power required for operation of the information-recording apparatus SR is supplied to the voltage-detection unit 5 from the internal power-supply unit 4 by way of the power line VB1. The voltage-detection unit 5 detects the voltage of the internal power-supply unit 4, and the internal power-supply unit 4 supplies the power to the system-controller unit 1 required for outputting the detected voltage.

In the data-compression unit 2, the data-compression ratio is set small such that the power consumption is low. The system-controller unit 1 sets this setting by way of the control signal C2. When the compression ratio of the data-compression unit 2 becomes small, the amount of data of the output signal Sgd with respect to the amount of data of the input signal Sgi is not reduced very much. Therefore, the information-recording apparatus 3 records an output signal Sgd having a large amount of data, and a contradicting state occurs in which the operating time becomes long and the amount of power consumed by the information-recording unit 3 increases. Moreover, when the compression ratio of the data-compression unit 2 becomes large, the amount of data of the output signal Sgd with respect to the input signal Sgi decreases. Therefore, the information-recording unit 3 records an output signal Sgd having a small amount of data, and a contradicting state occurs in which the operating time becomes short and the amount of power consumed by the information-recording unit 3 is decreased.

The problem described above is solved by using the method described below. The relationship in the data-compression unit 2 between the data-compression ratio and the power consumption is measured in advance, and stored in advance in the ROM of the system-controller unit 1. Also, the relationship in the information-recording unit 3 between the amount of information to be recorded per unit time and the power consumption is set in advance, and stored in advance in ROM of the system-controller unit 1. Moreover, when the data-compression ratio is set, the power consumption of the data-compression unit 2 is set to correspond to the data-compression ratio. Furthermore, when the data-compression is set, the amount of information per unit time that is recorded by the information-recording unit 3 is set, so the power consumption of the information-recording unit 3 is also set. Based on this kind of information, the system-controller unit 1 sets the data-compression ratio of the data-compression unit 2 using the control signal C2 such that the sum of the amount of power consumption by the data-compression unit 2 and the amount of power consumption by the information-recording unit 3 becomes a minimum. Therefore, even when the amount of power remaining in the internal power-supply unit 4 becomes low, by lowering the data-compression ratio, it is possible to lower the power consumption of the information-recording apparatus SR and end the recording operation in song units without having to end the recording operation for a song in the middle.

Step 7 is a process that is performed when the voltage of the internal power-supply unit 4 is sufficiently high and there is a sufficient amount of power remaining in the internal power-supply unit 4. The data-compression unit 2 compresses the input signal Sgi, and after the information-recording unit 3 records the output signal Sgd that is output from the data-compression unit 2, the system-controller unit 1 advances to step S18.

In step S18, the system-controller unit 1 determines whether or not the recording operation by the information-recording apparatus SR has ended. More specifically, by way of the signal C1 that is output from the data-compression unit 2, the system-controller unit 1 determines whether or not there is still program information that was input as the input signal Sgi. When the recording operation is not finished (step S18: NO), the system-controller unit 1 goes to step S3, and when the recording operation is finished (step S18: YES), the system-controller unit 1 goes to the standby mode of step S9.

In step S10, the recording operation by the information-recording apparatus SR ends.

### (III) Overall Construction and Operation of a Second Embodiment

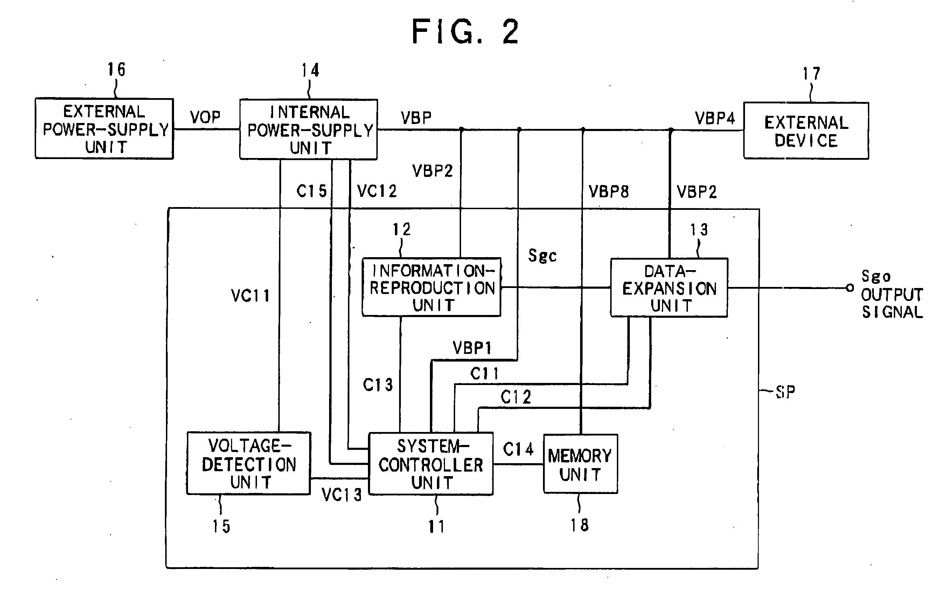

FIG. 2 will be used to explain the overall construction of the information-reproduction apparatus SP of a second embodiment of the invention. FIG. 2 is a block diagram showing the main construction of information-reproduction apparatus SP of this embodiment.

As shown in FIG. 2, the information-reproduction apparatus SP of this embodiment comprises: an information-reproduction unit 12; a data-expansion unit 13 such as a DSP that expands a reproduction signal Sgc, which is a signal reproduced by the information-reproduction unit 12; a system-controller unit 11 that detects and controls each block of the information-reproduction apparatus SP; an internal power-supply unit 14 such as a battery that stores externally supplied power, and supplies power to each block of the information-reproduction apparatus SP; a voltage-detection unit 15 that detects the voltage of the internal power-supply unit 14, and a memory unit 18 that records or reproduces information required by the information-reproduction apparatus SP.

The internal power-supply unit 14 is used as a power supply for driving an external device 17. In this embodiment, the internal power-supply unit 14 is used when driving an external device 17 such as the starter of a vehicle.

Furthermore, a CPU unit for performing operations, a ROM for executing a storedprogramanda RAM for temporarily storing the operation results of the executed program are also included in the system-controller unit 11.

Next, the overall operation will be explained.

In the information-reproduction apparatus SP of this embodiment, the information-reproduction unit 12 is a player that reproduces information such as music data that is stored on a reproduction medium (not shown in the figures) such as a CD, and it outputs reproduced information such as music as a reproduction signal Sgc, then the data-expansion unit 13 expands the reproduction signal Sgc and outputs it as an output signal Sgo (hereafter the information will be referred to as the program information).

When the rpm of the CD or reproduction medium of the information-reproduction unit 12 increases, the bit rate (bits/sec) or amount of information per unit time of the reproduction signal Sgc that is reproduced by the information-reproduction unit 12 becomes larger. In that case, the amount of power consumed by the information-reproduction unit 12 increases.

In this embodiment, the reproduction medium is explained as being a CD, however, the invention is not limited to this, and it is also possible for the reproduction medium to be a CD-R, CD-RW, DVD-R, DVD-RW, DVD-ROM, DVD+R, DVD+RW, DVD+ROM, MD, HDD or the like, and the information-reproduction unit 12 can be a player that corresponds to these types of media.

The data-expansion ratio of the data-expansion unit 13 is controlled by a control signal C11 from the system-controller unit 11. When the data-expansion ratio of the reproduction signal Sgc becomes high, the number of operations performed by the data-expansion unit 13 increases, so the data-expansion unit 13 must perform a complex expansion process. As a result, the amount of power consumed by the data-expansion unit 13 increases.

When the rpm of the CD or reproduction medium of the information-reproduction unit 12 decreases, the bit rate (bits/sec) or amount of information per unit time of the reproduction signal Sgc that is reproduced by the information-reproduction unit 12 becomes smaller. In that case, the amount of power consumed by the information-reproduction unit 12 decreases.

Also, when the data-expansion ratio of the reproduction signal Sgc becomes low, the number of operations that must be performed by the data-expansion unit 13 decreases and so the data-expansion unit 13 does not have to perform a complex expansion process. As a result, the power consumed by the data-expansion unit 13 becomes low.

The relationship between the bit rate or amount of information per unit time that is reproduced and the power consumption of the information-reproduction unit 12 is measured beforehand, and stored beforehand in the ROM of the system-controller unit 11. Moreover, the relationship between the rpm of the reproduction medium that corresponds to the bit rate and the amount of power consumed by the information-reproduction unit 12 is stored beforehand in the ROM.

The relationship between the data-expansion ratio and power consumption of the data-expansion unit 13 is also measured beforehand and stored beforehand in the ROM of the system-controller unit 11. Moreover, when the data-expansion ratio is set, the power consumption of the data-expansion unit 13 that corresponds to that data-expansion ratio is also set. Furthermore, when the data-expansion ratio is set, the bit rate or amount of information per unit time of the reproduction signal Sgc that is reproduced by the information-reproduction unit 12 is set, and thus the power consumption of the information-reproduction unit 12 is also set.

The internal power-supply unit 14 is a battery or the like that provides a power supply to each block of the information-reproduction apparatus, however, power may also be supplied from an external power-supply unit 16. In that case, the external power-supply unit 16 generates stable power and provides a power supply for each block of the information-recording apparatus SP, as well as charges the internal power-supply unit 14.

The internal power-supply unit 14 supplies the required power to the system-controller unit 11 by way of the power line VBP1, supplies the required power to the data-expansion unit 13 by way of the power line VBP2, and supplies the required power to the information-reproduction unit 12 by way of the power line VBP2. Also, the internal power-supply unit 14 supplies the required power to the memory unit 18 by ways of the power line VBP8. In this way, the internal power-supply unit 14 supplies the required power to each block.

The internal power-supply unit 14 is also necessary as a power supply when starting an external device 17 such as the starter of an automobile. After the external device 17 such as the starter of an automobile is started and the engine of the automobile is operating, the external power-supply unit 16 generates power from the rotation of the engine, and supplies power to the internal power-supply unit 14. When power stops being supplied to the internal power-supply unit 14 from the engine corresponding to the external power-supply unit 16, the engine may stop. When the engine is stopped, the system-controller unit 11 outputs the reproduction signal Sgc from the information-reproduction unit 12 as necessary, and the data-expansion unit 13 performs the data compression process and outputs the output signal Sgo.

The voltage-detection unit 15 detects the voltage level of the internal power-supply unit 14 by way of the signal VC11. The detection result is output to the system-controller unit 11 by way of the signal VC13. According to the information of the signal VC13, the system-controller unit 13 sets whether or not to have the information-reproduction unit 12 output a reproduction signal Sgc, and have the data-expansion unit 3 expand the data and output it as the output signal Sgo.

After power stops being supplied to the internal power-supply unit 14 from the external power-supply unit 16, the internal power-supply unit 14 outputs information to the system-controller unit 11 by way of the signal VC12 that indicates that power has stopped being supplied. After receiving this information, the system-controller unit 11 detects that it is necessary to operate the information-reproduction apparatus SP within the power capacity of the internal power-supply 14.

### (IV) Second Embodiment of the Invention

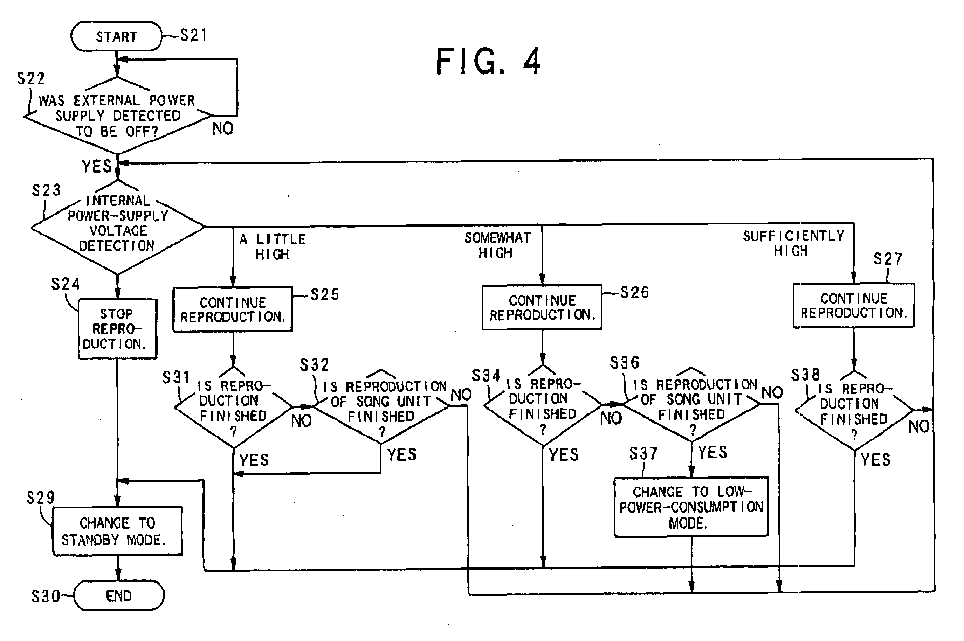

Next, FIG. 4 will be used to explain the reproduction process of the output signal Sgo, which is the program information of this embodiment and that is executed under the control of the system-controller unit 11. FIG. 4 is a flowchart showing the reproduction process of this embodiment.

Also, this embodiment explains the processing by the system-controller unit 11 according to the voltage level of the internal power-supply unit 14 after power stops being supplied to the internal power-supply unit 14 from the external power-supply unit 16.

As shown in FIG. 4, in the reproduction process of this embodiment, the reproduction process starts in step S21. In other words, the information-reproduction unit 12 outputs the reproduction signal Sgc, and the data-expansion unit 3 expands that data and outputs the expanded output signal Sgo. The system-controller unit 11 controls the operations described above.

In step S22, the system-controller unit 11 detects whether or not power is being supplied to the internal power-supply unit 14 from the external power-supply unit 16. The system-controller unit 11 detects whether or not power is being supplied to the internal power-supply unit 14 from the external power-supply unit 16 by way of the signal V12 that is output from the internal power-supply unit 14. When power is being supplied to the internal power-supply unit 14 from the external power-supply unit 16 (step S22: NO), the information-reproduction unit 12 outputs the reproduction signal Sgc, then the data-expansion unit 3 expands the data and outputs the expanded output signal Sgo, after which the system-controller unit 11 checks again whether the signal VC12 has changed in step S22. When power is not being supplied to the internal power-supply unit 14 from the external power-supply unit 16 (step S22: YES), the system-controller unit 11 advances to step S23.

In step S23, the voltage-detection unit 15 detects the voltage of the internal power-supply unit 14 by way of the signal VC11, and inputs the detected value to the system-controller unit 11 by way of the signal VC13. As a result, when the voltage of the internal power-supply unit 14 is sufficiently high (for example, 14.4 volts or greater for the battery of this embodiment), the system-controller unit 11 advances to step S27; when the voltage is somewhat high but is less than the voltage for advancing to step S27, the system-controller unit 11 advances to step S26; when the voltage is somewhat high but is less than the voltage for advancing to step S26, the system-controller unit 11 advances to step S25; and when the voltage is less than the voltage for advancing to step S25 (for example, less than 12.0 volts for the batter of this embodiment), the system-controller unit 11 advances to step S24.

In step S24, the system-controller unit 11 determines that the remaining power capacity of the internal power-supply unit 14 is low, and immediately ends the reproduction operation, then advances to step S29.

In step S29, the information-reproduction apparatus SP changes to the standby mode. Here, the standby mode is the state in which only the minimum amount of power required by the information-reproduction apparatus SR is consumed. More specifically, it is the state in which power is supplied from the internal power-supply unit 14 by way of the power line VBP4 to only the memory unit 18 in which the information required for operation of the information-reproduction apparatus SP is recorded. By having the information-reproduction apparatus SP change to this kind of state, it is possible to prevent an extra amount of power from the internal power-supply unit 14 from being consumed. As a result, when the information-reproduction apparatus SP is mounted in a vehicle, it is possible to leave the amount of power in the internal power-supply 14 needed for starting the starter or external device 17. Moreover, it is possible to prevent a state in which, due to the reproduction operation of the information-reproduction apparatus SP, the power in internal power-supply 14 becomes low and the starter or external device 17 cannot be started.

In step S25, through the control of the system-controller unit 11, the information-reproduction unit 12 outputs the reproduction signal Sgc, then the data-expansion unit 3 expands the data and outputs an expanded output signal Sgo, after which the system-controller unit 11 advances to step S31.

In step S31, the system-controller unit 11 determines whether or not the reproduction operation by the information-reproduction apparatus SP has finished. More specifically, information indicating whether or not there is still information to be reproduced by the information-reproduction unit 12 is input to the system-controller unit 11 from the information-reproduction unit 12 by way of signal C13. When the reproduction operation is not finished (step S31: NO), the system-controller unit 11 advances to step S32. When the reproduction operation is finished (step S31: YES), the system-controller unit 11 goes to step S29.

In step S32, during the reproduction operation by the information-reproduction apparatus SP, the system-controller unit 11 determines in song units whether or not reproduction of the information output as the output signal Sgo has finished. More specifically, information, which indicates whether or not the information that was output as the reproduction signal Sgo is at the end of a song, is input to the system-controller unit 11 by way of the signal C13 that was output from the information-reproduction unit 12. When the system-controller unit 11 is not able to detect from signal C13 information that indicates that the reproduction signal Sgc is at the end of a song (step S32: NO), it goes to step S23 and detects the voltage of the internal power-supply unit 14 again. When the system-controller unit 11 is able to detect from signal C13 information that indicates that the program information is at the end of a song (step S32: YES), it advances to step S33.

Step S26 is a process performed when the detected voltage is higher that the voltage for advancing to step S25, but is not sufficiently large. As in step S25, under control from the system-controller unit 11, the information-reproduction unit 12 outputs the reproduction signal Sgc, and the data-expansion unit 13 expands the data and outputs the expanded output signal Sgo, then the system-controller unit 11 advances to step S34.

In step S34, as in step S31, the system-controller unit 11 determines whether or not the reproduction operation by the information-reproduction apparatus SP has finished. More specifically, information indicating whether or not there is still information to be reproduced by the information-reproduction unit 12 is input to the system-controller unit 11 from the information-reproduction unit 12 by way of signal C13. When the reproduction operation is not finished (step S34: NO), the system-controller unit 11 advances to step S36. When the reproduction operation is finished (step S34: YES), the system-controller unit 11 goes to step S29.

In step S36, as in step S32, during the reproduction operation by the information-reproduction apparatus SP, the system-controller unit 11 determines in song units whether or not reproduction of the information output as the output signal Sgo has finished. More specifically, information, which indicates whether or not the information that was output as the reproduction signal Sgo is at the end of a song, is input to the system-controller unit 11 by way of the signal C13 that was output from the information-reproduction unit 12. When the system-controller unit 11 is not able to detect from signal C13 information that indicates that the reproduction signal Sgc is at the end of a song (step S36: NO), it goes to step S23 and detects the voltage of the internal power-supply unit 14 again. When the system-controller unit 11 is able to detect from signal C13 information that indicates that the program information is at the end of a song (step S36: YES), it advances to step S37.

In step S37, the information-reproduction apparatus changes to the low-power-consumption mode. The low-power-consumption mode is a state in which the power that is supplied to the information-reproduction apparatus SP from the internal power-supply unit 14 is set to the minimum required amount, and the amount of power consumed by the information-reproduction apparatus SP is decreased. More specifically, the necessary power is supplied by way of the power line VB8 to the memory unit 18 in which the information required for the operation of the information-reproduction apparatus SP is recorded. This power is the minimum required amount of power for maintaining the state of the data recorded in the memory unit 18. Also, the power needed for operation of the information-reproduction apparatus SP is supplied to the system-controller unit 11 from the internal power-supply unit 14 by way of the power line VBP1. The internal power-supply unit 14 supplies only the power required for the detected voltage to be input from the voltage-detection unit 15, for the system-controller unit 11 to perform the judgment process and to output control signals to the other block units. Furthermore, power required for operation of the information-reproduction apparatus SP is supplied to the voltage-detection unit 15 from the internal power-supply unit 14 by way of the power line VBP1. The voltage-detection unit 15 detects the voltage of the internal power-supply unit 14, and the internal power-supply unit 14 supplies the power to the system-controller unit 11 required for outputting the detected voltage.

In the data-expansion unit 13, the data-expansion ratio is set to a small value in order to decrease the power consumption. The system-controller unit 11 sets this setting by way of the control signal C12. When the data-expansion ratio of the data-expansion unit 13 is small, the amount of power consumed by the data-expansion unit 13 is small. Also, the rpm of the recording medium of the information-reproduction unit 12 increases, and the information-reproduction unit 12 reproduces an amount of information per unit time that corresponds to the expansion ratio of the data-expansion unit 13.

The relationship between the data-expansion ratio and the power consumption of the data-expansion unit 13 is measured in advance and stored in advance in the ROM of the system-controller unit 11. Also, the relationship between the amount of information per unit time to be reproduced by the information-reproduction unit 12 and the power consumption of the information-reproduction unit 12 is measured in advance and stored in advance in the ROM of the system-controller unit 11. Moreover, when the data-expansion ratio is set, the power consumption of the data-expansion unit 13 is set to correspond with the data-expansion ratio. Furthermore, when the data-expansion ratio is set, the amount of information per unit time that is reproduced by the information-reproduction unit 12 is set, so the power consumption of the information-reproduction unit also becomes set. Based on this kind of information, the system-controller unit 11 keeps the quality of the output signal Sgo within a fixed range, and minimizes the sum of the amount of power consumed by the data-expansion unit 13 and the amount of power consumed by the information-reproduction unit 12. More specifically, the system-controller unit 11 sets the data-expansion ratio of the data-expansion unit 13 by the control signal C12. Also, the system-controller unit 11 sets the amount of information reproduced by the information-reproduction unit 12 by the control signal C13. When the recording medium of the information-reproduction unit 12 is a CD, the rpm of the CD of the information-reproduction unit 12 is set. As a result, even when the amount of power remaining in the internal power-supply unit 14 becomes low, it is possible to lower the power consumption of the information-reproduction apparatus SP and end the reproduction operation in song units by raising or lowering the data-expansion ratio without having to end the reproduction operation in the middle of a song.

Step S27 is a process that is performed when the voltage of the internal power-supply 14 is sufficiently high and there is sufficient amount of power remaining in the internal power-supply unit 14. As in step S26, under control from the system-controller unit 11, the information-reproduction unit 12 outputs the reproduction signal Sgc, and the data-expansion unit 13 expands the data and outputs the expanded output signal Sgo, then the system-controller unit 11 advances to step S38.

In step S38, as in step S34, the system-controller unit 11 determines whether or not the reproduction operation by the information-reproduction apparatus SP has finished. More specifically, information indicating whether or not there is still information to be reproduced by the information-reproduction unit 12 is input to the system-controller unit 11 from the information-reproduction unit 12 by way of signal C13. When the reproduction operation is not finished (step S38: NO), the system-controller unit 11 goes to step S23. When the reproduction operation is finished (step S38: YES), the system-controller unit 11 goes to step S30.

In step S30, the reproduction operation by the information-reproduction apparatus SP ends.

With the embodiment described above, when recording of program information such as audio by a vehicle-mounted information-recording apparatus is not finished when the vehicle engine stops, it is possible to control the power consumption of the information-recording apparatus based on the recording status, such as the compression ratio of the audio recorded by the recording means such as a HDD, and rpm corresponding to the writing speed of the HDD. In other words, after the vehicle engine has stopped, it has become possible to record the audio by changing the compression ratio of the audio being recorded and the speed of recording by the HDD to correspond to the power capacity of the battery or power supply of the information-recording apparatus, while at the same time maintain the quality of the recorded audio at a fixed quality.

Also, when it is determined that there is some power capacity remaining in the battery or power supply of the information-recording apparatus, by changing to the pause mode for recording the next audio information, it is possible to prevent using unnecessary power.

Furthermore, when the power capacity of the battery or power supply for the information-recording apparatus is not sufficient to continue the operation for recording audio, the recording operation stops immediately even in the middle of recording audio, and the management information for the audio that was in the progress of being recorded is deleted. With this kind of construction, by maintaining the power capacity remaining in the battery above a minimum amount, it is possible to maintain enough power to start a device such as a cell motor when starting the vehicle.

Also, when the power capacity of the battery or power supply of the information-recording apparatus becomes low, the operation of recording audio to the HDD is continued until the song in the progress of being recorded ends. After that, only the minimum amount of power required for the information-recording apparatus is consumed. Therefore, audio that is in the progress of being recorded is not interrupted in the middle. Also, since it is possible to end recording audio in song units, extra power remaining in the battery, whose remaining power is low, is not consumed, and thus it is possible to maintain enough power to operate a device such as a cell motor when starting the vehicle.

Moreover, by reducing the compression ratio of the audio when performing the operation for recording the audio, the power consumption of the DSP performing the audio compression is also reduced, so overall power consumption of the overall information-recording apparatus decreases. Also, since the percentage of power capacity remaining in the battery becomes smaller, it becomes even more possible to continue recording the audio to be recorded.

Furthermore, when the vehicle engine has stopped but the reproduction of program information such as audio that uses a vehicle-mounted information-reproduction apparatus has not yet finished, it is possible to control the power consumption of the information-reproduction apparatus based on the reproduction status such as decoding of the audio from the reproduction means such as a CD, and the rpm that corresponds to the reading speed of the CD. In other words, after the vehicle engine has stopped, it is possible to reproduce the remaining audio by changing the decoding rate of the audio being reproduced and the reproduction speed of the CD in accordance to the power capacity of the battery or power supply of the information-reproduction apparatus.

By recording the programs corresponding to the flowcharts shown in FIG. 3 and FIG. 4 on an information-recording medium such as a flexible disk or the like, or by obtaining those programs via a network such as the Internet and then storing them, and then using a general-purpose microcomputer or the like to read and execute those programs, it is possible to use that general-purpose microcomputer as the system-controller units 1, 11 of the embodiments of the invention.

Also, in this embodiment, the case of dividing the voltage of the internal power-supply unit into four voltages was explained, however, the invention is not limited to these four voltages, and it is possible to even further divide the voltage of the internal power-supply unit. For example, when a drop in voltage of the internal power-supply unit is detected immediately after starting to record or reproduce information, it is also possible for the information-recording/reproduction apparatus to change to the low-power-consumption mode, and then to perform the recording or reproduction operation again from the beginning.

Moreover, it is possible to estimate the power capacity remaining in the internal power-supply unit from the speed that the voltage of the internal power-supply unit drops. In that case, by knowing beforehand the amount of information to be recorded or reproduced and the time required for recording or reproduction to end, it is possible to set the timing for changing to the low-power-consumption mode according to the amount of information and remaining time.

Furthermore, the voltage of the internal power-supply unit may change according to the season, so it is also possible to change the detected value of the voltage of the internal power-supply unit of FIG. 2 and FIG, 3 in summer and winter. For example, in the summer when the air temperature is high, the value for the detected voltage in FIG. 2 and FIG. 3 can be set to a lower value, and in the winter when the air temperature is low, the value for the detected voltage in FIG. 2 and FIG. 3 can be set to a higher value.

Also, in the low-power-consumption mode, it is possible to reduce the operating frequency of the system-controller unit, and to reduce the power consumption of the system-controller unit.

Moreover, in the embodiments described above, the case where the information-recording apparatus and information-reproduction apparatus were mounted in a vehicle was explained, however the invention is not limited to the case where they are mounted in a vehicle. For example, the invention could also be applied to a portable information-recording apparatus or information-reproduction apparatus that could be carried.

Furthermore, the invention could also be applied to the case where information-recording/reproduction apparatuses in a vehicle and at home are connected by a wireless LAN, and having program information such as audio information be recorded from the home information-recording/reproduction apparatus to the vehicle mounted information-recording/reproduction apparatus at night, and then listening to the audio information that was recorded at night when driving the vehicle the next day.

It should be understood that various alternatives to the embodiment of the invention described herein may be employed in practicing the invention. Thus, it is intended that the following claims define the scope of the invention and that methods and structures within the scope of these claims and their equivalents be covered thereby.

## Claims

1. An information recording apparatus (SR) that records program information in a recording device comprising:
a control device (1) which controls the operation of said apparatus; a voltage monitoring device (5) which monitors the power supply voltage supplied to said apparatus; and
an information compression device (2) which compresses said program information before recording said program information in said recording device; and wherein
said control device switches to a low-power consumption mode for lowering the power consumption of said apparatus when recording said program information, when said power supply voltage becomes less than a predetermined first threshold value, and **characterised in that**
said control device controls said information compression device to control the compression ratio of said program information after switching to said low power consumption mode.

2. The information recording apparatus according to claim 1,
wherein
said control device controls said information compression device to decrease the compression ratio of said program information after switching to said low power consumption mode.

3. The information recording apparatus according to claim 1,
wherein
said control device controls said information compression device to increase the compression ratio of said program information after switching to said low power consumption mode.

4. The information recording apparatus according to any one of claims 1 to 3, **characterized in that** the information recording apparatus further comprises
a processing device (1, 2, 3) which performs a specified process on said program information when recording in said recording device; and wherein
said control device controls said processing device in order to perform the recording operation of said program information at minimum power consumption set according to the relationship between the recording status of the program information by said recording device, and processing status of said processing device.

5. An information recording method of recording program information in a recording device, comprising :
a control process of controlling the operation of said apparatus;
a voltage monitoring process of monitoring the power supply voltage supplied to said apparatus; and
an information compression process of compressing said program information before recording said program information in said recording device; and wherein
said control process switches to a low power consumption mode for lowering the power consumption of said apparatus when recording said program information when said power supply voltage becomes less than a predetermined first threshold value, and **characterised in that**
said control process controls said information compression device to control the compression ratio of said program information after switching to said low power consumption mode.

6. The information recording method according to claim 5,
wherein said control process controls said information compression process to decrease the compression ratio of said program information after switching to said low power consumption mode.

7. The information-recording method according to claim 5,
wherein
said control process controls said information compression process to increase the compression ratio of said program information after switching to said low power consumption mode.

8. A computer readable information recording medium on which an information recording program is recorded in a readable way by a computer included in an information recording apparatus,
the information recording medium comprises the information recording program causing the computer to function as:
a control device which controls the operation of said apparatus;
a voltage monitoring device which monitors the power supply voltage that is supplied to said apparatus; and
an information compression device which compresses said program information before recording said program information in said recording device; and wherein
said control device switches to a low power consumption mode for lowering the power consumption of said apparatus when recording said program information when said power supply voltage becomes less than a predetermined first threshold value, and **characterised in that**;
said control device controls said information compression device to control the compression ratio of said program information after switching to said low power consumption mode.

9. The computer readable information recording medium according to claim 8, wherein
the information recording program causes the computer to function as said control device which controls said information compression device to decrease the compression ratio of said program information after switching to said low power consumption mode.

10. The computer readable information recording medium according to claim 8, wherein
the information recording program causes the computer to function as said control device which controls said information compression device to increase the compression ratio of said program information after switching to said low power consumption mode.

## Patentansprüche

1. Informationsaufzeichnungsgerät (SR), das in einer Aufzeichnungsvorrichtung Programminformationen aufzeichnet, umfassend:
eine Steuervorrichtung (1), die den Betrieb des Geräts steuert; eine Spannungsüberwachungsvorrichtung (5), die die an das Gerät gelieferte Versorgungsspannung überwacht; und
eine Informationskomprimierungsvorrichtung (2), die die Programminformationen vor dem Aufzeichnen der Programminformationen in der Aufzeichnungsvorrichtung komprimiert; und wobei die Steuervorrichtung beim Aufzeichnen der Programminformationen in eine Niedrigleistungsverbrauchsbetriebsart umschaltet, um den Leistungsverbrauch des Geräts zu verringern, wenn die Versorgungsspannung geringer als ein vorbestimmter erster Schwellenwert wird, und **dadurch gekennzeichnet, dass**
die Steuervorrichtung die Informationskomprimierungsvorrichtung steuert, um das Komprimierungsverhältnis der Programminformationen nach dem Umschalten in die Niedrigleistungsverbrauchsbetriebsart zu steuern.

2. Informationsaufzeichnungsgerät nach Anspruch 1,
wobei die Steuervorrichtung die Informationskomprimierungsvorrichtung steuert, um das Komprimierungsverhältnis der Programminformationen nach dem Umschalten in die Niedrigleistungsverbrauchsbetriebsart zu verringern.

3. Informationsaufzeichnungsgerät nach Anspruch 1,
wobei die Steuervorrichtung die Informationskomprimierungsvorrichtung steuert, um das Komprimierungsverhältnis der Programminformationen nach dem Umschalten in die Niedrigleistungsverbrauchsbetriebsart zu erhöhen.

4. Informationsaufzeichnungsgerät nach einem der Ansprüche 1 bis 3, **dadurch gekennzeichnet, dass** das Informationsaufzeichnungsgerät ferner eine Verarbeitungsvorrichtung (1, 2, 3) umfasst, die die Programminformationen einer vorbestimmten Verarbeitung unterzieht, wenn in der Aufzeichnungsvorrichtung aufgezeichnet wird; und wobei die Steuervorrichtung die Verarbeitungsvorrichtung steuert, um den Vorgang der Aufzeichnung der Programminformationen bei einem minimalen Leistungsverbrauch durchzuführen, der entsprechend der Beziehung zwischen dem Status der Aufzeichnung der Programminformationen durch die Aufzeichnungsvorrichtung und dem Verarbeitungsstatus der Verarbeitungsvorrichtung festgelegt ist.

5. Informationsaufzeichnungsverfahren zum Aufzeichnen von Programminformationen in einer Aufzeichnungsvorrichtung, umfassend:
einen Steuerprozess des Steuerns des Betriebs des Geräts;
einen Spannungsüberwachungsprozess des Überwachens der an das Gerät gelieferten Versorgungsspannung; und
einen Informationskomprimierungsprozess des Komprimierens der Programminformationen vor dem Aufzeichnen der Programminformationen in der Aufzeichnungsvorrichtung; und wobei
der Steuerprozess beim Aufzeichnen der Programminformationen in eine Niedrigleistungsverbrauchsbetriebsart umschaltet, um den Leistungsverbrauch des Geräts zu verringern, wenn die Versorgungsspannung geringer als ein vorbestimmter erster Schwellenwert wird, und **dadurch gekennzeichnet, dass**
der Steuerprozess die Informationskomprimierungsvorrichtung steuert, um das Komprimierungsverhältnis der Programminformationen nach dem Umschalten in die Niedrigleistungsverbrauchsbetriebsart zu steuern.

6. Informationsaufzeichnungsverfahren nach Anspruch 5,
wobei der Steuerprozess den Informationskomprimierungsprozess steuert, um das Komprimierungsverhältnis der Programminformationen nach dem Umschalten in die Niedrigleistungsverbrauchsbetriebsart zu verringern.

7. Informationsaufzeichnungsverfahren nach Anspruch 5,
wobei der Steuerprozess den Informationskomprimierungsprozess steuert, um das Komprimierungsverhältnis der Programminformationen nach dem Umschalten in die Niedrigleistungsverbrauchsbetriebsart zu erhöhen.

8. Computerlesbares Informationsaufzeichnungsmedium, auf dem ein Informationsaufzeichnungsprogramm aufgezeichnet ist, derart, dass es durch einen in einem Informationsaufzeichnungsgerät enthaltenen Computer lesbar ist, wobei das Informationsaufzeichnungsmedium das Informationsaufzeichnungsprogramm umfasst, das bewirkt, dass der Computer fungiert als
Steuervorrichtung, die den Betrieb des Geräts steuert; Spannungsüberwachungsvorrichtung, die die Versorgungsspannung, die an das Gerät geliefert wird, überwacht; und
Informationskomprimierungsvorrichtung, die die Programminformationen vor dem Aufzeichnen der Programminformationen in der Aufzeichnungsvorrichtung komprimiert; und wobei
die Steuervorrichtung beim Aufzeichnen der Programminformationen in eine Niedrigleistungsverbrauchsbetriebsart umschaltet, um den Leistungsverbrauch des Geräts zu verringern, wenn die Versorgungsspannung geringer als ein vorbestimmter erster Schwellenwert wird, und **dadurch gekennzeichnet, dass**
die Steuervorrichtung die Informationskomprimierungsvorrichtung steuert, um das Komprimierungsverhältnis der Programminformationen nach dem Umschalten in die Niedrigleistungsverbrauchsbetriebsart zu steuern.

9. Computerlesbares Informationsaufzeichnungsmedium nach Anspruch 8,
wobei das Informationsaufzeichnungsprogramm bewirkt, dass der Computer als Steuervorrichtung fungiert, die die Informationskomprimierungsvorrichtung steuert, um das Komprimierungsverhältnis der Programminformationen nach dem Umschalten in die Niedrigleistungsbetriebsart zu verringern.

10. Computerlesbares Informationsaufzeichnungsmedium nach Anspruch 8,
wobei das Informationsaufzeichnungsprogramm bewirkt, dass der Computer als Steuervorrichtung fungiert, die die Informationskomprimierungsvorrichtung steuert, um das Komprimierungsverhältnis der Programminformationen nach dem Umschalten in die Niedrigleistungsbetriebsart zu erhöhen.

## Revendications

1. Appareil d'enregistrement d'informations (SR) qui enregistre des informations de programme dans un dispositif d'enregistrement comprenant :
un dispositif de commande (1) qui commande le fonctionnement dudit appareil ;
un dispositif de surveillance de tension (5) qui surveille la tension d'alimentation d'énergie fournie au dit appareil ; et
un dispositif de compression d'informations (2) qui compresse lesdites informations de programme avant d'enregistrer lesdites informations de programme dans ledit dispositif d'enregistrement ; et dans lequel
ledit dispositif de commande commute dans un mode de faible consommation d'énergie pour réduire la consommation d'énergie dudit appareil en enregistrant lesdites informations de programme, lorsque ladite tension d'alimentation d'énergie devient inférieure à une première valeur prédéterminée de seuil, et **caractérisé en ce que** ledit dispositif de commande ordonne au dit dispositif de compression d'informations de réguler le taux de compression desdites informations de programme après la commutation dans ledit mode de faible consommation d'énergie.

2. Appareil d'enregistrement d'informations selon la revendication 1, dans lequel
ledit dispositif de commande ordonne au dit dispositif de compression d'informations de réduire le taux de compression desdites informations de programme après la commutation dans ledit mode de faible consommation d'énergie.

3. Appareil d'enregistrement d'informations selon la revendication 1, dans lequel
ledit dispositif de commande ordonne au dit dispositif de compression d'informations d'augmenter le taux de compression desdites informations de programme après la commutation dans ledit mode de faible consommation d'énergie.

4. Appareil d'enregistrement d'informations selon l'une quelconque des revendications 1 à 3, **caractérisé en ce que** l'appareil d'enregistrement d'informations comprend en outre :
un dispositif de traitement (1, 2, 3) qui effectue un processus spécifié sur lesdites informations de programme lors de l'enregistrement dans le dispositif d'enregistrement ;
et dans lequel
ledit dispositif de commande ordonne au dit dispositif de traitement d'effectuer l'opération d'enregistrement desdites informations de programme à une consommation d'énergie minimale réglée en fonction de la relation entre le statut d'enregistrement des informations de programme par ledit dispositif d'enregistrement, et le statut de traitement dudit dispositif de traitement.

5. Procédé d'enregistrement d'informations pour enregistrer des informations de programme dans un dispositif d'enregistrement comprenant :
un processus de commande consistant à commander le fonctionnement dudit appareil ;
un processus de surveillance de tension consistant à surveiller la tension d'alimentation d'énergie fournie au dit appareil ; et
un processus de compression d'informations consistant à compresser lesdites informations de programme avant l'enregistrement desdites informations de programme dans ledit dispositif d'enregistrement ; et dans lequel
ledit processus de commande commute dans un mode de faible consommation d'énergie pour réduire la consommation d'énergie dudit appareil en enregistrant lesdites informations de programme lorsque ladite tension d'alimentation d'énergie devient inférieure à une première valeur prédéterminée de seuil, et **caractérisé en ce que**
ledit processus de commande ordonne au dit dispositif de compression d'informations de réguler le taux de compression desdites informations de programme après la commutation dans ledit mode de faible consommation d'énergie.

6. Procédé d'enregistrement d'informations selon la revendication 5, dans lequel ledit processus de commande ordonne au dit processus de compression d'informations de réduire le taux de compression desdites informations de programme après la commutation dans ledit mode de faible consommation d'énergie.

7. Procédé d'enregistrement d'informations selon la revendication 5, dans lequel
ledit processus de commande ordonne au dit processus de compression d'informations d'augmenter le taux de compression desdites informations de programme après la commutation dans ledit mode de faible consommation d'énergie.

8. Support d'enregistrement d'informations lisible par ordinateur sur lequel un programme d'enregistrement d'informations est enregistré d'une manière lisible par un ordinateur compris dans un appareil d'enregistrement d'informations,
le support d'enregistrement d'informations comprenant le programme d'enregistrement d'informations qui amène l'ordinateur à fonctionner en tant que :
un dispositif de commande qui commande le fonctionnement dudit appareil ;
un dispositif de surveillance de tension qui surveille la tension d'alimentation d'énergie qui est fournie au dit appareil ; et
un dispositif de compression d'informations qui compresse lesdites informations de programme avant l'enregistrement desdites informations de programme dans ledit dispositif d'enregistrement ; et dans lequel
ledit dispositif de commande commute dans un mode de faible consommation d'énergie pour réduire la consommation d'énergie dudit appareil en enregistrant lesdites informations de programme lorsque ladite tension d'alimentation d'énergie devient inférieure à une première valeur déterminée de seuil, et **caractérisé en ce que** ledit dispositif de commande ordonne au dit dispositif de compression d'informations de réguler le taux de compression desdites informations de programme après la commutation dans ledit mode de faible consommation d'énergie.

9. Support d'enregistrement d'informations lisible par ordinateur selon la revendication 8, dans lequel
le programme d'enregistrement d'informations amène l'ordinateur à fonctionner en tant que ledit dispositif de commande qui ordonne au dit dispositif de compression d'informations de réduire le taux de compression desdites informations de programme après la
commutation dans ledit mode de faible consommation d'énergie.

10. Support d'enregistrement d'informations lisible par ordinateur selon la revendication 8, dans lequel
le programme d'enregistrement d'informations amène l'ordinateur à fonctionner en tant que ledit dispositif de commande qui ordonne au dit dispositif de compression d'informations d'augmenter le taux de compression desdites informations de programme après la commutation dans ledit mode de faible consommation d'énergie.
